# EUROPÄISCHE PATENTSCHRIFT

(11) **EP 0 872 381 B1**
(45) Veröffentlichungstag und Bekanntmachung des Hinweises auf die Patenterteilung: **24.09.2003**
(21) Anmeldenummer: 98104371.4
(22) Anmeldetag: 11.03.1998
(51) Int. Cl.: B60R 9/058

(54) **Befestigungsvorrichtung für Dachlastträger**
Fastening device for a roof rack
Dispositif de fixation pour un porte-bagages de toit

(30) Priorität: 17.04.1997 DE 19716047
(43) Veröffentlichungstag der Anmeldung: 21.10.1998
(73) Patentinhaber: Dr.Ing.h.c. F. Porsche Aktiengesellschaft, 70435 Stuttgart (DE)
(72) Erfinder: Tress, Andreas, 74321 Bietigheim-Bissingen (DE); Pfister, Klaus, 75433 Maulbronn (DE)

(56) Entgegenhaltungen:
- EP-A- 0 694 441
- DE-A- 3 112 214
- US-A- 4 448 336

## Beschreibung

Die Erfindung bezieht sich auf einen Dachlastträger und seine Befestigungsvorrichtung gemäß dem Oberbegriff des Patentanspruchs 1.

Aus der DE 31 51 405 C2 geht ein Fahrzeugdach für einen Personenkraftwagen hervor, das in seitlich außenliegenden Bereichen sich in Fahrzeuglängsrichtung erstreckende versenkte Dachkanäle aufweist, wobei im Bereich der Dachkanäle Befestigungsvorrichtungen für die Trägerfüße von Dachlastträgern vorgesehen sind. Bei dieser Anordnung sind in beide Dachkanäle profilierte Halteschienen eingesetzt, welche zum Befestigen im Dachkanal einen Befestigungssteg und zum Anschluß eines Dachlastträgers einen nach oben verlaufenden Steg mit einem nach außen gerichteten Rand aufweisen.

Ein Stützarm des Dachlastträgers liegt dabei an der Oberseite des nach außen gerichteten Randes auf, wogegen ein profiliertes Klemmteil mittels einer Spannschraube gegen die Unterseite des Randes und gegen den Stützarm gespannt wird. Die Spannschraube ist mittels einer zusätzlichen abschließbaren Klappe gegen Diebstahl geschützt.

Bei dieser Art von Befestigung für den Dachlastträger muß der Dachkanal in Fahrzeugquerrichtung gesehen eine relativ große Breite aufweisen, um das abgewinkelte Klemmteil in den Dachkanal einführen zu können. Zudem sind diese Trägerfüße nur zur Aufnahme einer relativ geringen Dachlast geeignet. Jeder aus einem Stützarm, einem Klemmteil und einer abschließbaren äußeren Klappe gebildete mehrteilige Trägerfuß weist einen aufwendigen Aufbau auf.

Die EP-A-0 694 441 offenbart eine Befestigungsvorrichtung für Dachlastträger mit am Fahrzeugdach angeordneten, sich in Fahrzeuglängsrichtung erstreckenden Dachkanälen, wobei die endseitigen Trägerfüße der Dachlastträger unmittelbar an in die Dachkanäle eingesetzten Schienen befestigt sind. Hierzu sind an der Oberseite der bereichsweise vorstehenden Schienen schwalbenschwanzförmige Nuten ausgebildet, in die verschiebbare Muttern eingesetzt sind. Zur Befestigung der Trägerfüße werden Befestigungsschrauben durch Öffnungen der Trägerfüße hindurchgeführt und in die Muttern eingedreht.

Aufgabe der Erfindung ist es, an einem Fahrzeugdach mit eine geringe Breite aufweisenden Dachkanälen eine einen einfachen Aufbau aufweisende Befestigung für Dachlastträger zu schaffen, wobei die Dachlastträger schnell und einfach montierbar sind und zudem hohe Dachlasten aufnehmen können.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die einstückige Ausbildung der Trägerfüße und die Anordnung von vormontierten Aufnahmeadaptern im Bereich der Dachkanäle eine einfache Befestigung für die Dachlastträger erzielt wird, mit der hohe Dachlasten realisierbar sind.

Durch das bereichsweise formschlüssige Zusammenwirken von Aufnahmeadapter und Trägerfuß erfolgt bereits beim Aufsetzen des Dachlastträgers eine Vorfixierung des Dachlastträgers. Der Aufnahmeadapter ist in einfacher Weise mittels einer einzigen Befestigungsschraube an einer am Boden des Dachkanals verankerten Sechskant-Blindnietmutter oder einer geeigneten Grundplatte (Befestigungselement) festlegbar. Durch den unteren hohl ausgebildeten Endbereich des Trägerfußes wird der obere, aus dem Dach vorstehende Aufnahmebereich des Aufnahmeadapters und die erste Befestigungsschraube vollständig abgedeckt (Diebstahlschutz).

Durch die an der Oberseite des Aufnahmeadapters angeordneten, symmetrisch um die Mittelachse geneigten Auflageflächen läßt sich der Aufnahmeadapter sowohl für die vorderen und hinteren Trägerfüße als auch für die linke bzw. rechte Seite jedes Dachlastträgers verwenden. Der untere Rand des Trägerfußes verläuft umlaufend mit geringem Abstand zum darunterliegenden Fahrzeugdach. Jeder Trägerfuß läßt sich durch eine zweite von oben her zugängliche Befestigungsschraube in einfacher Weise am darunterliegenden Aufnahmeadapter befestigen.

Zum Diebstahlschutz der zweiten Befestigungsschraube und der in die Nut des Querträgers eingesetzten Aufnahmeelemente dient eine abschnittsweise in den Querträger eingeschobene und mit einem Schloß versehene Schloßkappe, die einen oberen seitlich außenliegenden Stützabschnitt des Trägerfußes abdeckt.

Ein Ausführungsbeispiel der Erfindung ist in der Zeichnung dargestellt und wird im folgenden näher erläutert.

Es zeigen
- Fig. 1: eine Explosionszeichnung, in der ein Teilbereich eines Fahrzeugdaches und ein Dachtransportsystem dargestellt sind,

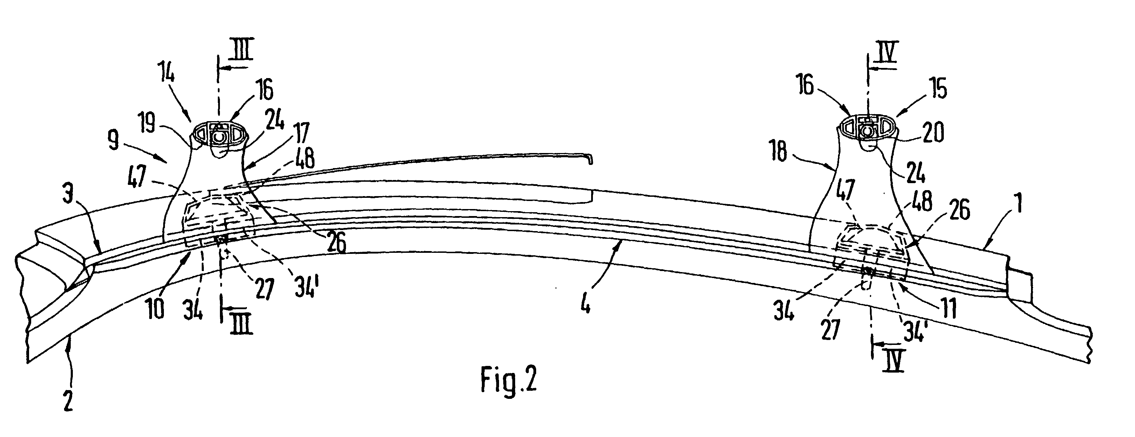

- Fig. 2: eine Teilseitenansicht auf das Fahrzeugdach und das Dachtransportsystem,
- Fig. 3: einen Schnitt nach der Linie III-III der Fig. 2 in größerer Darstellung durch den vorderen Dachlastträger,
- Fig. 4: einen Schnitt nach der Linie IV-IV der Fig. 2 in größerer Darstellung durch den hinteren Dachlastträger,
- Fig. 5: einen Schnitt nach der Linie V-V der Fig. 3,
- Fig. 6: einen Schnitt nach der Linie VI-VI der Fig. 3,
- Fig. 7: einen Schnitt nach der Linie VII-VII der Fig. 4,
- Fig. 8: eine perspektivische Ansicht von schräg vorne und außen auf den Aufnahmeadapter in größerer Darstellung,
- Fig. 9: eine perspektivische Ansicht von innen auf den Aufnahmeadapter in größerer Darstellung und
- Fig. 10: eine Ansicht von der Fahrzeugaußenseite senkrecht auf den Aufnahmeadapter in größerer Darstellung.

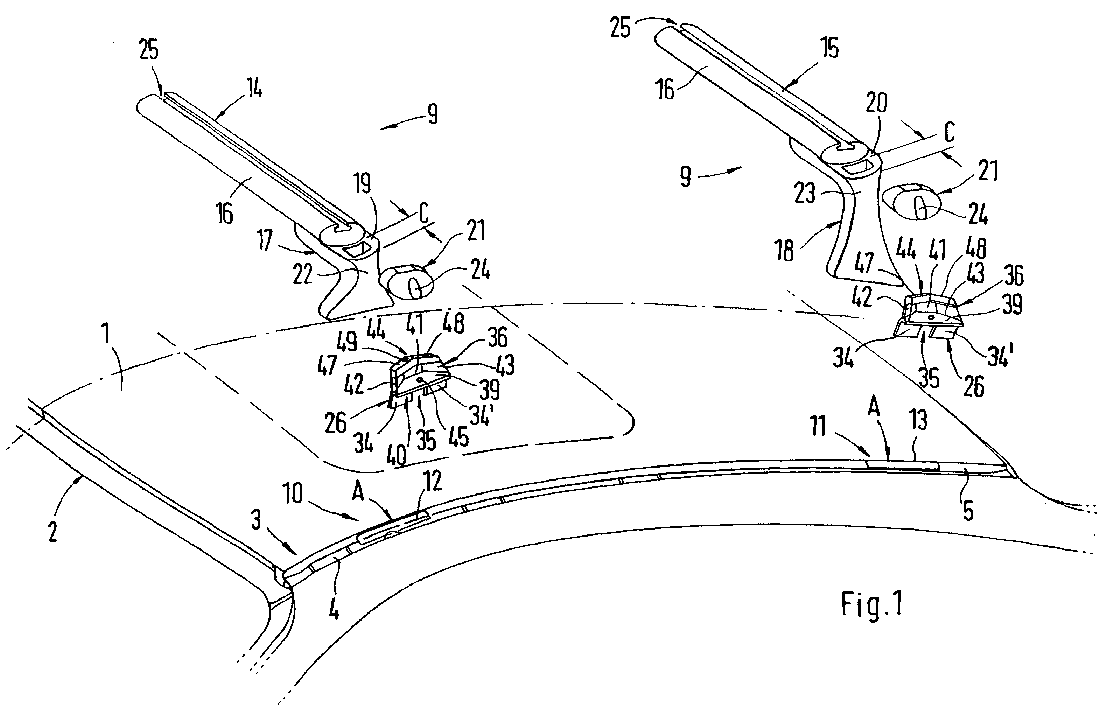

Ein Fahrzeugdach 1 für ein Kraftfahrzeug 2, insbesondere für einen Personenkraftwagen, weist in seitlich außenliegenden Bereichen 3 jeweils einen sich in Fahrzeuglängsrichtung erstreckenden, vertieften Dachkanal 4 auf, der nach oben hin durch eine Abdeckleiste 5 verschlossen ist. In Fig. 1 sind die linke Hälfte des Fahrzeugdaches 1 und der zugeordnete Dachkanal 4 dargestellt. Jeder sich über die gesamte Länge des Fahrzeugdachs 1 erstreckende Dachkanal 4 ist im Querschnitt etwa U-förmig profiliert und setzt sich aus einem Boden 6 und zwei beabstandet angeordneten aufrechten Seitenwänden 7, 8 zusammen. Das Fahrzeugdach 1 weist örtlich ein Schiebe- oder Ausstelldach auf (gestrichelt dargestellt in Fig. 1).

Zur Befestigung eines Dachtransportsystems 9 sind an jeder Abdeckleiste 5 in einem vorderen Bereich 10 und in einem hinteren Bereich 11 verlagerbare Klappen 12, 13 vorgesehen, die entweder verschiebbar oder klappbar ausgebildet sind. In Fig. 1 nehmen die Klappen 12, 13 ihre Schließstellung A ein.

Im Ausführungsbeispiel sind die Klappen 12, 13 um eine in Fahrzeuglängsrichtung ausgerichtete Drehachse von der bündig mit der Abdeckleiste 5 verlaufenden Schließstellung A in eine aufrechte Offenstellung B verlagerbar und umgekehrt. Das Dachtransportsystem 9 besteht gemäß Fig. 1 aus einem vorderen Dachlastträger 14 und einem hinteren Dachlastträger 15.

Jeder dieser beiden Dachlastträger 14, 15 umfaßt einen eine aerodynamisch optimierte Querschnittsform aufweisenden Querträger 16, der an seinen beiden seitlich außenliegenden Endbereichen mit einstückig ausgebildeten Trägerfüßen 17 bzw. 18 verbunden ist.

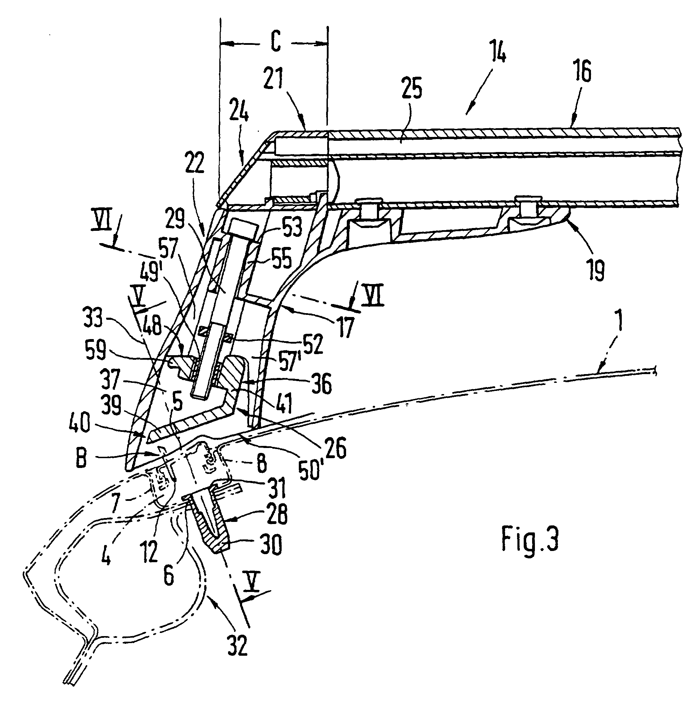

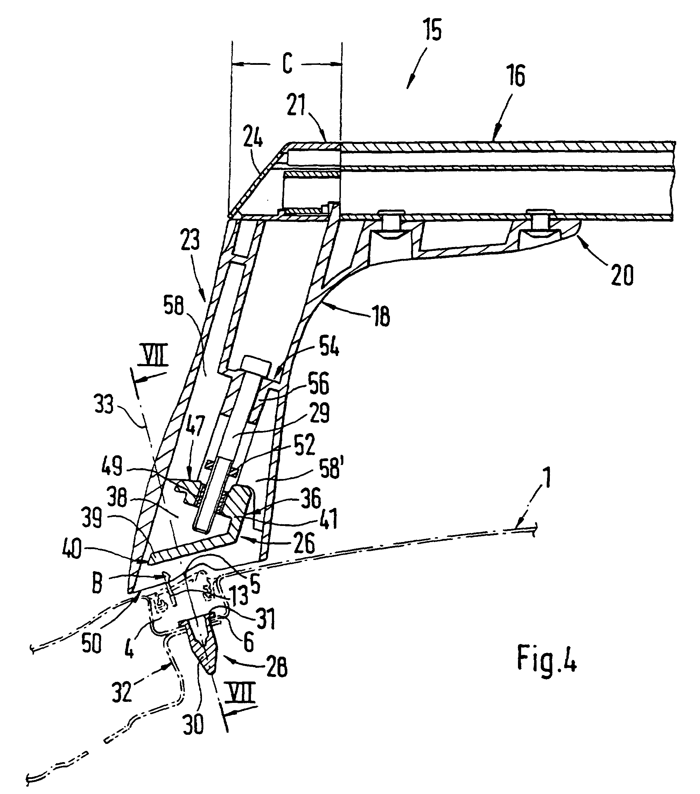

Jeder Endbereich des im Ausführungsbeispiel eine ovale Querschnittsform aufweisenden Querträgers 16 liegt abschnittsweise an einem darunterliegenden, querverlaufenden Stützabschnitt 19, 20 des korrespondierenden Trägerfußes 17, 18 auf, wobei in diesem Bereich die Verbindung zwischen beiden Teilen durch Nieten, Schrauben oder dergleichen erfolgt (siehe Fig. 3 und 4). Die Stützabschnitte 19, 20 überragen den Querträger 16 zur Außenseite hin um ein Maß C, wobei auf diesen freibleibenden Bereich endseitigen Schloßkappen 21 aufgesetzt sind. Die Schloßkappen 21 sind seitlich abschnittsweise in den Querträger 16 eingesteckt und verlaufen etwa außenhautbündig zur Kontur des Querträgers 16 und in Verlängerung zur aufrechten Außenkontur 22, 23 der Trägerfüße 17, 18. Jede Schloßkappe 21 umfaßt ein nicht näher dargestelltes integriertes Schloß, das von der Außenseite her zugänglich ist und durch eine schwenkbare Abdeckkappe 24 von außen her verkleidet ist. Der Querträger 16 weist in einem oberen Bereich eine längsverlaufende durchgehende Nut 25 auf, um an ihm nicht näher dargestellte Halteeinrichtungen für Skier, Surfbretter, Fahrräder oder dergleichen zu befestigen.

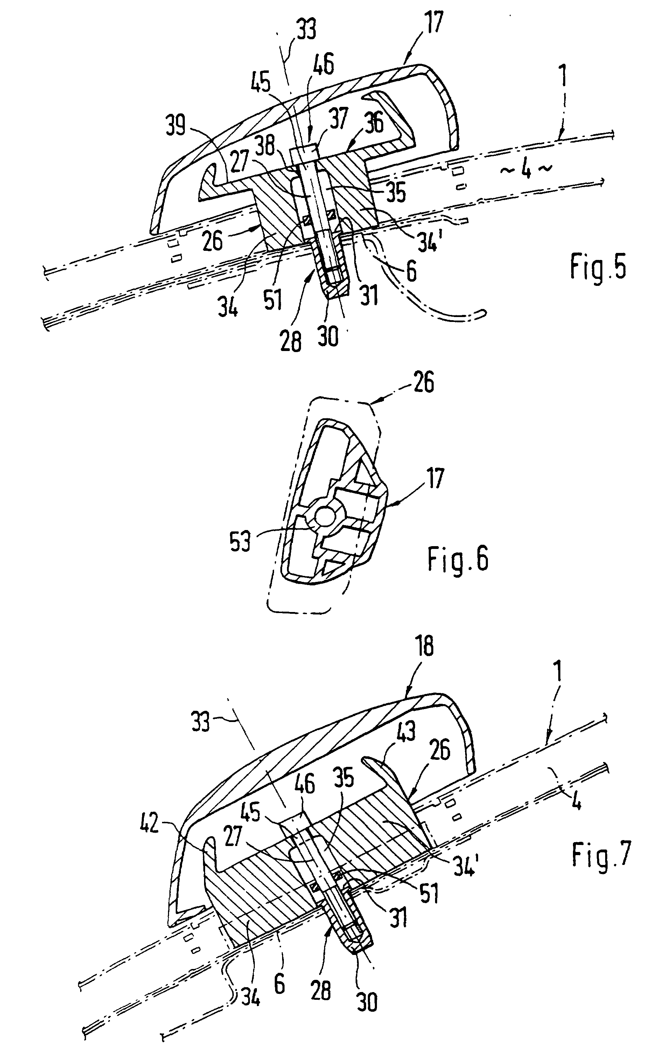

Der vordere Dachlastträger 14 und der hintere Dachlastträger 15 sind im Bereich ihrer Trägerfüße 17, 18 erfindungsgemäß jeweils unter Zwischenschaltung eines Aufnahmeadapters 26 mit dem Fahrzeugdach 1 verbunden. Jeder Aufnahmeadapter 26 ist einerseits mittels einer ersten Befestigungsschraube 27 mit einem am Boden 6 des Dachkanals 4 angeordneten Befestigungsorgan 28 (siehe Fig. 5 und 7) und andererseits mittels einer zweiten Befestigungsschraube 29 mit dem Trägerfuß 17, 18 lösbar verbunden (siehe Fig. 3 und 4).

Die Befestigungsorgane 28 sind etwa in einem mittleren Bereich der Längserstreckung der Klappen 12, 13 vorgesehen. Gemäß den Fig. 5 und 7 wird jedes Befestigungsorgan 28 im Ausführungsbeispiel durch eine nach unten hin geschlossene Sechskant-Blindnietmutter 30 gebildet, die am Boden 6 des Dachkanals 4 verankert ist. Ein endseitiger, oberer Kragen 31 der Sechskant-Blindnietmutter 30 stützt sich an der Oberseite des Bodens 6 ab, wogegen sich der wesentliche Teil der Sechskant-Blindnietmutter 30 unterhalb des Bodens 6 seitlich neben einem Dachrahmen 32 in Richtung Fahrgastraum erstreckt und durch eine nicht näher dargestellte innere Dachrahmenverkleidung abgedeckt ist. Die nach oben hin offene Sechskant-Blindnietmutter 30 weist eine zentrische Bohrung mit einem Innengewinde auf, in das die erste Befestigungsschraube 27 eindrehbar ist. Die aufrechte Mittelachse 33 der Sechskant-Blindnietmutter 30 bzw. der ersten Befestigungsschraube 27 ist etwa rechtwinkelig zum Boden 6 des Dachkanals 4 ausgerichtet und verläuft von unten innen schräg nach oben außen. Anstelle der Sechskant-Blindnietmutter 30 könnte das Befestigungsorgan 28 auch durch eine am Boden des Dachkanals aufliegende Grundplatte mit einem Gewindeabschnitt oder dergleichen gebildet werden. Die Aufnahmeadapter 26 sind nur bei hochgeklappter oder weggeschobener Klappe 12, 13 am Fahrzeugdach 1 befestigbar.

Erfindungsgemäß ist der Aufnahmeadapter 26 so ausgebildet, daß er sowohl für die vorderen Trägerfüße 17 als auch für die hinteren Trägerfüße 18 und jeweils für die linke und rechte Seite jedes Dachlastträgers 14, 15 verwendbar ist, so daß für alle vier Trägerfüße 17, 18 identisch ausgebildete Aufnahmeadapter 26 verwendbar sind.

Jeder Aufnahmeadapter 26 greift bei geöffneter Klappe 12, 13 mit zumindest einem schmalen, hochkant angeordneten, in Längsrichtung des Dachkanals 4 verlaufenden Abstützsteg 34, 34' in den Dachkanal 4 ein und stützt sich an der Oberseite des Bodens 6 des Dachkanals 4 ab.

Im Ausführungsbeispiel sind zwei in Längsrichtung fluchtend aneinandergesetzte Abstützstege 34, 34' vorgesehen, wobei zwischen den Abstützstegen 34, 34' ein Freiraum 35 für die erste Befestigungsschraube 27 ausgebildet ist. Die Abstützstege 34, 34' sind von der Unterseite des sich oberhalb des Fahrzeugdaches 1 erstreckenden, vorstehenden Aufnahmebereiches 36 des Aufnahmeadapters 26 weggeführt.

Hohl ausgebildete untere Endbereiche 37, 38 der Trägerfüße 17, 18 werden auf die vorstehenden Aufnahmebereiche 36 der Aufnahmeadapter 26 aufgesetzt und sind mit diesen verbindbar. Der hohl ausgebildete untere Endbereich 37, 38 jedes Trägerfußes 17, 18 wirkt zumindest abschnittsweise formschlüssig mit dem innenliegenden vorstehenden Aufnahmebereich 36 des Aufnahmeadapters 26 zusammen und verkleidet diesen und die erste Befestigungsschraube 27 vollständig (Diebstahlschutz).

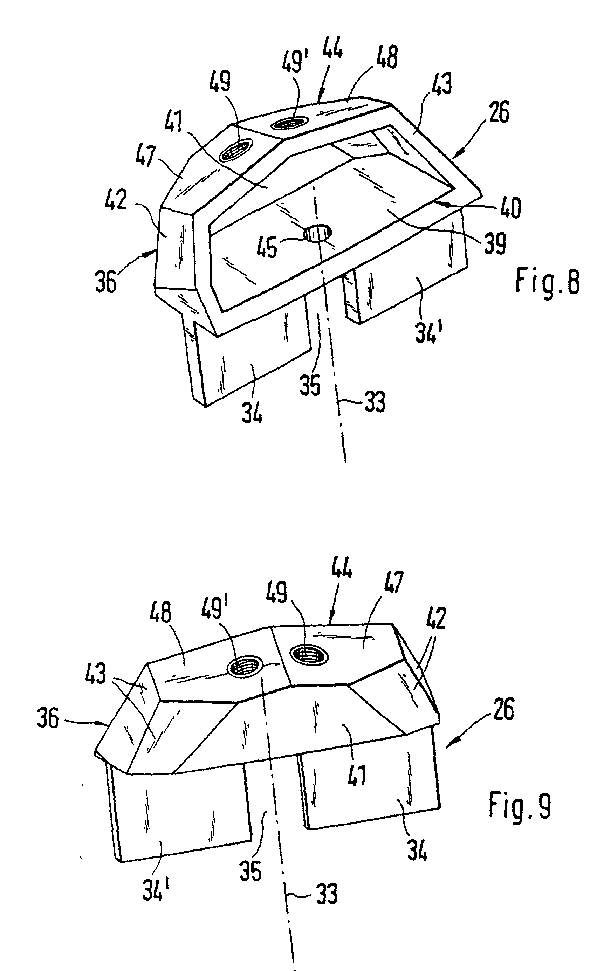

Der vorstehende Aufnahmebereich 36 des Aufnahmeadapters 26 umfaßt eine etwa parallel zum Boden 6 des Dachkanals 4 verlaufende untere Abstützfläche 39, von der mit Ausnahme des außenliegenden Randes 40 allseitig aufrechte, aneinandergesetzte Stützwände 41, 42, 43 weggeführt sind, wobei die Stützwände 41, 42, 43 einen oberen Dachabschnitt 44 tragen. Der Dachabschnitt 44, die Stützwände 41, 42, 43 und die Abstützfläche 39 bilden einen von der Außenseite her zugänglichen nischenförmigen Hohlraum (Fig. 8).

Zum Hindurchführen der ersten Befestigungsschraube 27 ist an der Abstützfläche 39 - in Fahrzeuglängsrichtung gesehen - etwa mittig eine Bohrung 45 ausgebildet, die oberhalb des Freiraumes 35 liegt. Die erste Befestigungsschraube 27 stützt sich mit einem Kopfabschnitt 46 an der Oberseite der unteren, eben ausgebildeten Abstützfläche 39 ab. Die Abstützfläche 39 übergreift die schmalen Abstützstege 34, 34' - in Fahrzeugquerrichtung gesehen - beidseitig und zwar zur Fahrzeugmitte hin etwas mehr als nach außen hin.

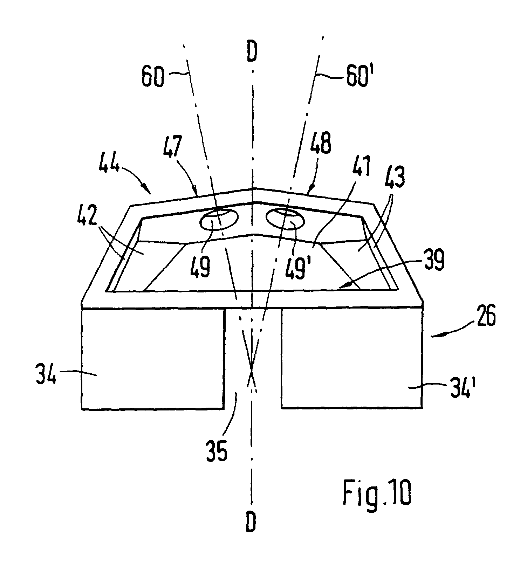

Der obere Dachabschnitt 44 des Aufnahmebereiches 36 umfaßt zwei symmetrisch zur Mittelachse verlaufende Auflageflächen 47, 48, wobei an jeder Auflagefläche 47, 48 benachbart der Mittelachse jeweils eine Gewindebuchse 49, 49' mit einem Innengewinde vorgesehen ist. Jede Gewindebuchse 49, 49' ist etwa rechtwinkelig zur korrepondierenden Auflagefläche 47, 48 ausgebildet und kann zum Ausgleich von Toleranzen verschwenkbar sein. Der obere Rand der Gewindebuchse 49, 49' verläuft etwas versenkt zur darüberliegenden Auflagefläche 47, 48. Durch die beiden symmetrisch geneigten Auflageflächen 47, 48 läßt sich der gleiche Aufnahmeadapter 26 sowohl für die vorderen Trägerfüße 17 als auch für die unterschiedlich ausgebildeten hinteren Trägerfüße 18 verwenden. Die Symmetrieebene D-D des Aufnahmeadapters 26 und die Mittelachsen 60, 60' der Gewindebuchsen 60, 60' sind in Fig. 10 dargestellt, wobei die Mittelachsen 60, 60' symmetrisch zur Symmetrieebene D-D verlaufen.

Im Ausführungsbeispiel werden die Aufnahmeadapter 26 durch Gußteile aus Leichtmetall oder einer Leichtmetallegierung gebildet. Die Aufnahmeadapter 26 könnten jedoch auch aus einem glasfaserverstärkten Kunststoff gefertigt sein. Die vorderen Trägerfüße 17 und die hinteren Trägerfüße 18 weisen bereichsweise eine unterschiedliche Form und Höhenerstreckung auf. Die Trägerfüße 17, 18 werden ebenfalls durch Gußteile aus Leichtmetall oder einer Leichtmetallegierung gebildet.

Zur Festlegung des vorderen Dachlastträgers 14 werden die zweiten Befestigungsschrauben 29 in die - in Fahrtrichtung gesehen - hintenliegenden Gewindebuchsen 49' eingedreht, wogegen die Befestigungsschrauben 29 für den hinteren Dachlastträger 15 in die vorneliegenden Gewindebuchsen 49 eingeschraubt werden. Bei montiertem Dachtransportsystem 9 verläuft der untere Rand 50, 50' der Trägerfüße 17, 18 mit etwa gleichbleibendem geringem Abstand zum darunterliegenden Fahrzeugdach 1; d.h. die Trägerfüße 17, 18 liegen nur am Aufnahmeadapter 26, nicht jedoch am Fahrzeugdach 1 auf. Somit ist eine Beschädigung des Lackes durch Relativbewegungen im Fahrbetrieb ausgeschlossen.

Die erste Befestigungsschraube 27 ist am Aufnahmeadapter 26 vormontiert und ist durch einen auf einen Gewindeabschnitt aufgesetzten Gummiring 51 gegen Herausfallen gesichert. Der Außendurchmesser des Gummiringes 51 ist etwas kleiner als die Breite des Freiraumes 35. Die zweite Befestigungsschraube 29 ist am Trägerfuß 17, 18 vormontiert und wird ebenfalls durch einen aufgesetzten Gummiring 52 gegen Herausfallen gesichert. An den Trägerfüßen 17, 18 sind unterhalb der Schloßkappe 21 mehrere querverlaufende aufrechte Versteifungsrippen (nicht näher dargestellt) und ein von oben her zugänglicher Auflagebereich 53, 54 für den Kopf der zweiten Befestigungsschraube 29 vorgesehen.

Unterhalb des Auflagebereiches 53, 54 erstreckt sich abschnittsweise ein hohlzylindrischer Führungsabschnitt 55, 56 für die zweite Befestigungsschraube 29. An die Außenseite der Führungsabschnitte 55, 56 sind im Ausführungsbeispiel kreuzförmig angeordnete, nach unten gerichtete Rippen 57, 57', 58, 58' angeschlossen, deren unteres Ende so ausgebildet ist, daß eine Führung für den Dachabschnitt 44 der eingesetzten Aufnahmeadapter 26 gebildet wird. In Längs- und Querrichtung wird der Aufnahmeadapter 26 abschnittsweise durch die innere Form des Trägerfußes 17, 18 festgelegt, so daß nur eine geringe Verschiebebewegung zwischen Trägerfuß 17, 18 und Aufnahmeadapter 26 möglich ist.

Die Befestigung des Dachtransportsystems 9 erfolgt in der Weise, daß bei geöffneten Klappen 12, 13 die vier identisch ausgebildeten Aufnahmeadapter 26 in den Dachkanal 4 eingesetzt und durch Eindrehen der Befestigungsschrauben 27 in die zugeordneten Befestigungsorgane 28 fixiert werden. Anschließend werden die beiden Trägerfüße 17 des vorderen Dachlastträgers 14 und die Trägerfüße 18 des hinteren Dachlastträgers 25 auf die nach oben hin vorstehenden Aufnahmebereiche 36 der Aufnahmeadapter 26 formschlüssig aufgesetzt und mittels der zweiten Befestigungsschrauben 29 von oben her festgelegt. Durch nachfolgendes seitliches Einschieben der Schloßkappen 21 und Verschließen der integrierten Schlösser werden die zweiten Befestigungsschrauben 29 diebstahlsicher abgedeckt, so daß zur Befestigung der Dachlastträger 14, 15 am Aufbau und zum Schutz der in die Nut 25 eingeschobenen Aufnahmeelemente ein einziges Schloß pro Seite und Dachlastträger ausreicht. Die zweiten Befestigungsschrauben 29 verlaufen schräg von oben innen nach unten außen. Beide Befestigungsschrauben 27, 29 weisen einen zylindrischen Kopf mit einem Innensechskant auf.

Die Aufnahmeadapter 26 können pulverbeschichtet sein und zumindest im Anlagebereich auf dem Boden 6 des Dachkanals 4 eine lackschonende elastische Beschichtung aufweisen. Die zweiten Befestigungsschrauben 29 weisen für die vorderen und hinteren Trägerfüße 17, 18 jeweils die gleiche Länge auf.

Deshalb ist der Auflagebereich 54 an den hinteren Trägerfüßen 18 - die eine größere Höhenerstreckung aufweisen als die vorderen Trägerfüße 17 - tieferliegend ausgebildet (Fig. 4). Der äußere Rand 59 des Dachabschnitts 44 verläuft mit Versatz zum weiter nach außen hin vorstehenden, unteren Rand 40 der Abstützfläche 39, damit ein Imbusschfüssel zum Betätigen der ersten Befestigungsschraube 27 von oben her einführbar ist.

## Patentansprüche

1. Dachlastträger und seine Befestigungsvorrichtung an Fahrzeugen, insbesondere Personenkraftwagen, mit am Fahrzeugdach in seitlich außenliegenden Bereichen angeordneten, sich in Fahrzeuglängsrichtung erstreckenden Dachkanälen, die nach oben hin durch Abdeckleisten verschlossen sind, wobei die Abdeckleisten in Befestigungsbereichen von endseitigen Trägerfüßen der Dachlastträger Klappen aufweisen, die jeweils von einer Schließstellung in eine Offenstellung verlagerbar sind und in Offenstellulng der Klappen endseitige Trägerfüße der Dachlastträger an im Dachkanal unterhalb der Abdeckleiste angeordneten Befestigungsorganen festlegbar sind, **dadurch gekennzeichnet, daß** in Offenstellung (B) der Klappen (12, 13) im Bereich jeder Klappe (12, 13) am Dachkanal (4) ein Aufnahmeadapter (26) vormontiert ist, der mittels zumindest eines schmalen, hochkant ausgerichteten, langgestreckten Abstützsteges (34, 34') in den Dachkanal (4) hineinragt und sich am Boden (6) des Dachkanals (4) abstützt und daß jeder Aufnahmeadapter (26) ferner einen gegenüber dem Fahrzeugdach (1) vorstehenden Aufnahmebereich (36) aufweist, auf den ein hohl ausgebildeter unterer Endbereich (37, 38) des Trägerfußes (17, 18) des Dachlastträgers (14, 15) aufsetzbar und mit diesem verbindbar ist.

2. Dachlastträger und seine Befestigungsvorrichtung nach Anspruch 1, **dadurch gekennzeichnet, daß** der hohl ausgebildete untere Endbereich (37, 38) jedes Trägerfußes (17, 18) zumindest abschnittsweise formschlüssig mit dem innenliegenden, vorstehenden Aufnahmebereich (36) des Aufnahmeadapters (26) zusammenwirkt.

3. Dachlastträger und seine Befestigungsvorrichtung nach Anspruch 1, **dadurch gekennzeichnet, daß** am Aufnahmeadapter (26) zwei mit Abstand zueinander angeordnete, in Längsrichtung des Dachkanals (4) ausgerichtete Abstützstege (34, 34') vorgesehen sind, wobei sich in einem Freiraum (35) zwischen den beiden Abstützstegen (34, 34') eine aufrecht verlaufende erste Befestigungsschraube (27) zum Festlegen des Aufnahmeadapters (26) am Befestigungsorgan (28) des Dachkanals (4) erstreckt.

4. Dachlastträger und seine Befestigungsvorrichtung nach Anspruch 3, **dadurch gekennzeichnet, daß** das Befestigungsorgan (28) durch eine am Boden (6) des Dachkanals (4) verankerte Sechskant-Blindnietmutter (30) oder geeignetes Befestigungsorgan gebildet wird, die nach unten hin geschlossen ausgebildet ist.

5. Dachlastträger und seine Befestigungsvorrichtung nach einem oder mehreren der vorangegangenen Ansprüche, **dadurch gekennzeichnet, daß** die Abstützstege (34, 34') von der Unterseite des sich oberhalb des Fahrzeugdaches (1) erstreckenden Aufnahmebereiches (36) des Aufnahmeadapters (26) weggeführt sind.

6. Dachlastträger und seine Befestigungsvorrichtung nach einem oder mehreren der vorangegangenen Ansprüche, **dadurch gekennzeichnet, daß** der Aufnahmebereich (36) vollständig von dem hohl ausgebildeten unteren Endbereich (37, 38) des Trägerfußes (17, 18) umgeben ist.

7. Dachlastträger und seine Befestigungsvorrichtung nach einem oder mehreren der vorangegangenen Ansprüche, **dadurch gekennzeichnet, daß** der untere Rand (50, 50') des Trägerfußes (17, 18) mit geringem Abstand zum darunterliegenden Fahrzeugdach (1) verläuft.

8. Dachlastträger und seine Befestigungsvorrichtung nach einem oder mehreren der vorangegangenen Ansprüche, **dadurch gekennzeichnet, daß** die mit einem Kopfabschnitt (46) an der Oberseite einer unteren Abstützfläche (39) des Aufnahmebereiches (36) aufliegende erste Befestigungsschraube (27) durch den formgebenden Trägerfuß (17, 18) bei montierten Dachlastträger (14, 15) gegen Diebstahl geschützt ist.

9. Dachlastträger und seine Befestigungsvorrichtung nach einem oder mehreren der vorangegangenen Ansprüche, **dadurch gekennzeichnet, daß** der obere Aufnahmebereich (36) eine etwa parallel zum Boden (6) ausgerichtete ebene Abstützfläche (39) umfaßt, von der mit Ausnahme des außenliegenden Randes (40) allseitig aufrechte, aneinandergesetzte Stützwände (41, 42, 43) nach oben hin weggeführt sind, wobei die Stützwände (41, 42, 43) einen Dachabschnitt (44) tragen.

10. Dachlastträger und seine Befestigungsvorrichtung nach Anspruch 9, **dadurch gekennzeichnet, daß** der Dachabschnitt (44) zwei spiegelbildlich zu der Mittelachse (33) der ersten Befestigungsschraube (27) verlaufende Auflageflächen (47, 48) aufweist, wobei an jeder Auflagefläche (47, 48) eine in eine Bohrung eingesetzte Gewindebuchse (49, 49') mit einem Innengewinde vorgesehen ist.

11. Dachlastträger und seine Befestigungsvorrichtung nach einem oder mehreren der vorangegangenen Ansprüche, **dadurch gekennzeichnet, daß** für die unterschiedlich ausgebildeten Trägerfüße (17, 18) des vorderen und hinteren Dachlastträgers (14, 15) sowie für die rechte und linke Seite jedes Trägerfußes (17, 18) der gleiche Aufnahmeadapter (26) verwendbar ist.

12. Dachlastträger und seine Befestigungsvorrichtung nach einem oder mehreren der vorangegangenen Ansprüche, **dadurch gekennzeichnet, daß** die Trägerfüße (17) des vorderen Dachlastträgers (14) an der in Fahrtrichtung gesehen hintenliegenden Gewindebuchse (49') mittels der zweiten Befestigungsschrauben (29) festlegbar sind, wogegen die Befestigungsschrauben (29) für die Trägerfüße (18) des hinteren Dachlastträgers (15) in die vorneliegenden Gewindebuchsen (49) eingedreht werden.

13. Dachlastträger und seine Befestigungsvorrichtung nach einem oder mehreren der vorangegangenen Ansprüche, **dadurch gekennzeichnet, daß** die von der Oberseite der Trägerfüße (17, 18) aus zugänglichen zweiten Befestigungsschrauben (29) und die in eine obere Nute (25) des Querträgers (16) eingesetzten Aufnahmeelemente durch eine mit einem Schloß versehene, abschnittsweise in den Querträger (16) eingeschobene Schloßkappe (21) gegen Diebstahl geschützt sind.

14. Dachlastträger und seine Befestigungsvorrichtung nach einem oder mehreren der vorangegangenen Ansprüche, **dadurch gekennzeichnet, daß** die Aufnahmeadapter (26) und/oder die Trägerfüße (17, 18) durch Gußteile aus Leichtmetall oder einer Leichtmetallegierung gebildet werden.

## Claims

1. A roof rack and its fixing device on vehicles, in particular passenger vehicles, with rain gutters provided on the vehicle roof in outer side regions and extending in the longitudinal direction of the vehicle, the rain gutters being upwardly closed by cover strips, wherein the cover strips have flaps in fixing regions of end supporting feet of the roof racks, each flap being movable from a closed position into an open position, and end supporting feet of the roof racks are securable to fixing members arranged in the rain gutter underneath the cover strip when the flaps are in the open position, **characterised in that**, when the flaps (12, 13) are in the open position (B), a mounting adapter (26) is premounted on the rain gutter (4) in the region of each flap (12, 13) and, by means of at least one narrow, elongate supporting piece (34, 34') arranged edgewise, projects into the rain gutter (4) and is supported on the base (6) thereof, and **in that** each mounting adapter (26) also has a mounting region (36) projecting from the vehicle roof (1), a hollow lower end region (37, 38) of the supporting foot (17, 18) of the roof rack (14, 15) being placeable onto the mounting region (36) and being connectable thereto.

2. A roof rack and its fixing device according to claim 1, **characterised in that** the hollow lower end region (37, 38) of each supporting foot (17, 18) co-operates positively, at least in part, with the internally arranged, projecting mounting region (36) of the mounting adapter (26).

3. A roof rack and its fixing device according to claim 1, **characterised in that** two spaced supporting pieces (34, 34') extending in the longitudinal direction of the rain gutter (4) are provided on the mounting adapter (26), and a vertically extending first fixing screw (27) for securing the mounting adapter (26) to the fixing member (28) of the rain gutter (4) extends in a space (35) between the two supporting pieces (34, 34').

4. A roof rack and its fixing device according to claim 3, **characterised in that** the fixing member (28) is formed by a downwardly closed, hexagonal blind rivet nut (30), anchored to the base (6) of the rain gutter (4), or [other] suitable fixing member.

5. A roof rack and its fixing device according to one or more of the preceding claims, **characterised in that** the supporting pieces (34, 34') extend from the underside of the mounting region (36) of the mounting adapter (26), the mounting region (36) projecting above the vehicle roof (1).

6. A roof rack and its fixing device according to one or more of the preceding claims, **characterised in that** the mounting region (36) is entirely surrounded by the hollow lower end region (37, 38) of the supporting foot (17, 18).

7. A roof rack and its fixing device according to one or more of the preceding claims, **characterised in that** the lower edge (50, 50') of the supporting foot (17, 18) is spaced slightly from the underlying vehicle roof (1).

8. A roof rack and its fixing device according to one or more of the preceding claims, **characterised in that** the first fixing screw (27), resting with a head portion (46) against the upper side of a lower supporting surface (39) of the mounting region (36), is protected against theft by the profiled supporting foot (17, 18) when the roof racks (14, 15) are mounted.

9. A roof rack and its fixing device according to one or more of the preceding claims, **characterised in that** the upper mounting region (36) comprises a flat supporting surface (39) which extends substantially parallel to the base (6) and from which, with the exception of the outer edge (40), mutually adjacent supporting walls (41, 42, 43) straight on all sides extend upwards, the supporting walls (41, 42, 43) carrying a roof portion (44).

10. A roof rack and its fixing device according to claim 9, **characterised in that** the roof portion (44) has two supporting surfaces (47, 48) extending mirror-symmetrically to the central axis (33) of the first fixing screw (27), wherein an internally threaded socket (49, 49') inserted into a bore is provided in each supporting surface (47, 48).

11. A roof rack and its fixing device according to one or more of the preceding claims, **characterised in that** the same mounting adapter (26) is usable for the differently formed supporting feet (17, 18) of the front and rear roof racks (14, 15) and for the left and right sides of each supporting foot (17, 18).

12. A roof rack and its fixing device according to one or more of the preceding claims, **characterised in that** the supporting feet (17) of the front roof rack (14) are securable to the rearward threaded socket (49') - viewed in the direction of travel - by means of the second fixing screws (29), while the fixing screws (29) for the supporting feet (18) of the rear roof rack (15) are screwed into the forward threaded sockets (49).

13. A roof rack and its fixing device according to one or more of the preceding claims, **characterised in that** the second fixing screws (29), accessible from the upper side of the supporting feet (17, 18), and the mounting components inserted into an upper groove (25) of the crossbar (16) are protected against theft by a locking cap (21) provided with a lock and partly inserted into the crossbar (16).

14. A roof rack and its fixing device according to one or more of the preceding claims, **characterised in that** the mounting adapters (26) and/or the supporting feet (17, 18) are formed by castings of light metal or a light metal alloy.

## Revendications

1. Porte-bagages de toit et son dispositif de fixation sur des véhicules, en particulier des voitures de tourisme, comportant des goulottes de toit disposées sur le toit du véhicule dans des zones situées latéralement à l'extérieur et s'étendant dans la direction longitudinale du véhicule, lesquelles sont fermées vers le haut par des baguettes de recouvrement, les baguettes de recouvrement présentant, dans des zones de fixation de pieds d'extrémité des porte-bagages de toit, des clapets qui sont déplaçables d'une position de fermeture à une position d'ouverture et, en position d'ouverture des clapets, des pieds d'extrémité des porte-bagages de toit pouvant être fixés sur des organes de fixation disposés dans la goulotte de toit au-dessous de la baguette de recouvrement, **caractérisé en ce qu'**en position d'ouverture (B) des clapets (12, 13), dans la zone de chaque clapet (12, 13) est prémonté sur la goulotte de toit (4) un adaptateur de réception (26) qui s'engage à l'intérieur de la goulotte de toit (4) au moyen d'au moins une étroite barrette d'appui (34, 34') allongée, orientée de chant, et qui prend appui contre le fond (6) de la goulotte de toit (4), et **en ce que** chaque adaptateur de réception (26) présente en outre une zone de réception (36) faisant saillie par rapport au toit (1) du véhicule, sur laquelle une zone terminale (37, 38) inférieure, réalisée creuse, du pied (17, 18) du porte-bagages de toit (14, 15) peut être placée et reliée à celui-ci.

2. Porte-bagages de toit et son dispositif de fixation selon la revendication 1, **caractérisé en ce que** la zone terminale inférieure (37, 38) réalisée creuse de chaque pied de porte-bagages (17, 18) coopère au moins par endroits par complémentarité de forme avec la zone de réception (36) saillante, située à l'intérieur, de l'adaptateur de réception (26).

3. Porte-bagages de toit et son dispositif de fixation selon la revendication 1, **caractérisé en ce que** sur l'adaptateur de réception (26) sont prévues deux barrettes (34, 34') disposées à distance l'une de l'autre et orientées dans la direction longitudinale de la goulotte de toit (4), une première vis de fixation (27) s'étendant verticalement dans un interstice (35) entre les deux barrettes d'appui (34, 34'), s'étendant sur l'organe de fixation (28) de la goulotte de toit (4), pour fixer l'adaptateur de réception (26).

4. Porte-bagages de toit et son dispositif de fixation selon la revendication 3, **caractérisé en ce que** l'organe de fixation (28) est formé par un rivet borgne hexagonal (30) ancré sur le fond (6) de la goulotte de toit (4) ou par un organe de fixation approprié qui est réalisé fermé vers le bas.

5. Porte-bagages de toit et son dispositif de fixation selon une ou plusieurs des revendications précédentes, **caractérisé en ce que** les barrettes d'appui (34, 34') partent de la face inférieure de la zone de réception (36) s'étendant au-dessus du toit (1) du véhicule, de l'adaptateur de réception (26).

6. Porte-bagages de toit et son dispositif de fixation selon une ou plusieurs des revendications précédentes, **caractérisé en ce que** la zone de réception (36) est entièrement entourée par la zone terminale inférieure (37, 38) réalisée creuse du pied de porte-bagages (17, 18).

7. Porte-bagages de toit et son dispositif de fixation selon une ou plusieurs des revendications précédentes, **caractérisé en ce que** le bord inférieur (50, 50') du pied de porte-bagages (17, 18) s'étend à faible distance du toit (1) du véhicule situé au-dessous.

8. Porte-bagages de toit et son dispositif de fixation selon une ou plusieurs des revendications précédentes, **caractérisé en ce que** la première vis de fixation (27) reposant, par une section de tête (46), sur la face supérieure d'une surface d'appui (39) inférieure de la zone de réception (36), est protégée contre le vol par le pied de porte-bagages (17, 18) définissant la forme lorsque le porte-bagages de toit (14, 15) est monté.

9. Porte-bagages de toit et son dispositif de fixation selon une ou plusieurs des revendications précédentes, **caractérisé en ce que** la zone de réception supérieure (36) comprend une surface d'appui (39) plane orientée approximativement parallèlement au fond (6), de laquelle, à l'exception du bord (40) situé à l'extérieur, partent de tous côtés vers le haut des parois d'appui (41, 42, 43) verticales et juxtaposées, les parois d'appui (41, 42, 43) portant une portion de toit (44).

10. Porte-bagages de toit et son dispositif de fixation selon la revendication 9, **caractérisé en ce que** la portion de toit (44) présente deux surfaces de support (47, 48) s'étendant dans une symétrie en miroir par rapport à l'axe médian (33) de la première vis de fixation (27), sur chaque surface de support (47, 48) étant prévue une douille taraudée (49, 49') avec un taraudage, insérée dans un perçage.

11. Porte-bagages de toit et son dispositif de fixation selon une ou plusieurs des revendications précédentes, **caractérisé en ce que** pour les pieds (17, 18) réalisés différemment du porte-bagages de toit avant (14) et du porte-bagages de toit arrière (15) ainsi que pour le côté droit et le côté gauche de chaque pied (17, 18) on peut utiliser le même adaptateur de réception (26).

12. Porte-bagages de toit et son dispositif de fixation selon une ou plusieurs des revendications précédentes, **caractérisé en ce que** les pieds (17) du porte-bagages de toit avant (14) peuvent être fixés à la douille taraudée (49'), située à l'arrière dans le sens de marche, au moyen des deuxièmes vis de fixation (29), tandis que les vis de fixation (29) pour les pieds (18) du porte-bagages de toit arrière (15) sont vissées dans les douilles taraudées (49) situées à l'avant.

13. Porte-bagages de toit et son dispositif de fixation selon une ou plusieurs des revendications précédentes, **caractérisé en ce que** les deuxièmes vis de fixation (29), accessibles depuis le côté supérieur des pieds de porte-bagages (17, 18), et les éléments de réception, insérés dans une rainure supérieure (25) de la traverse (16), sont protégés contre le vol par un capuchon de serrure (21) pourvu d'une serrure, introduit en partie dans la traverse (16).

14. Porte-bagages de toit et son dispositif de fixation selon une ou plusieurs des revendications précédentes, **caractérisé en ce que** les adaptateurs de réception (26) et/ou les pieds de porte-bagages (17, 18) sont formés par des pièces en fonte de métal léger ou d'un alliage de métaux légers.
